(19) Europäisches Patentamt
European Patent Office
Office européen des brevets

(11) Veröffentlichungsnummer: **0 563 962 B1**

(12) **EUROPÄISCHE PATENTSCHRIFT**

(45) Veröffentlichungstag der Patentschrift: **11.01.95**

(51) Int. Cl.$^{6}$: **C08G 77/38**, C08J 3/03, D06M 15/643

(21) Anmeldenummer: **93105429.0**

(22) Anmeldetag: **01.04.93**

(54) **Verfahren zur Herstellung von acyliertes aminofunktionelles Organopolysiloxan enthaltenden Emulsionen.**

(30) Priorität: **03.04.92 DE 4211269**

(43) Veröffentlichungstag der Anmeldung:
**06.10.93 Patentblatt 93/40**

(45) Bekanntmachung des Hinweises auf die Patenterteilung:
**11.01.95 Patentblatt 95/02**

(84) Benannte Vertragsstaaten:
**BE CH DE FR GB IT LI**

(56) Entgegenhaltungen:
**EP-A- 0 095 676**
**US-A- 5 039 738**

**DATABASE WPIL Section Ch, Week 8231, Derwent Publications Ltd., London, GB;Class C31, AN 82-64402E**

(73) Patentinhaber: **WACKER-CHEMIE GMBH**
**Hanns-Seidel-Platz 4**
**D-81737 München (DE)**

(72) Erfinder: **Bindl, Johann, Dr.**
**In den Grueben 172**
**W-8263 Burghausen (DE)**
Erfinder: **Lautenschlager, Hans-Jürgen, Dr.**
**Pappelweg 2**
**W-8261 Haiming (DE)**
Erfinder: **Huhn, Karl, Dr.**
**520 Meadowbrook Drive**
**Adrian,**
**Michigan 49221 (US)**
Erfinder: **Ninomiya, Kiyoshi**
**1-26-6 Hamadayama**
**Suginami-ku,**
**Tokyo 168 (JP)**

**EP 0 563 962 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von acyliertes aminofunktionelles Organopolysiloxan enthaltenden Emulsionen. Die Emulsionen sind insbesondere als Textilausrüstungsmittel einsetzbar.

Emulsionen von Aminogruppen aufweisenden Organopolysiloxanen werden schon seit einiger Zeit als Textilausrüstungsmittel eingesetzt. Bei den damit behandelten Textilien werden gute Weichgriffeffekte erreicht. Die bislang bevorzugt verwendete aminofunktionelle Gruppe

$-(CH_2)_3NHCH_2CH_2NH_2$

zeigt jedoch eine starke Neigung zur Thermovergilbung, einer Verfärbung der behandelten Fasern, die durch erhöhte Temperatur beschleunigt wird.

Eine besonders wirksame Reduzierung der Thermovergilbung ist durch Umsetzung der aminofunktionellen Organopolysiloxane mit Acylierungsmitteln, wie Carbonsäuren und deren Anhydriden beschrieben in beispielsweise EP-A-349 753 und EP-A-349 754 (M.Ozaki et al.; offengelegt am 10.01.1990 für Toray Silicone Co., Ltd, Japan), JP-A-57/101076 (K.Kodera und S.Hashizume; offengelegt am 23.06.1982 für Nikka K.K. Co., Ltd. Japan) und EP-A-161 888 (T.J. Tangney und M.J. Ziemelis; offengelegt am 21.11.1985 für Dow Corning Corp., USA). Acylierungsmittel zur Reduzierung der Thermovergilbung sind ferner Lactone, deren Verwendung zur Modifizierung von Aminosilicon-Textilbehandlungsmitteln bekannt ist aus u.a. EP-A-342 830 und EP-A-342 834 (S.E.Cray et al.; offengelegt am 05.05.1989 für Dow Corning Ltd., Großbritannien) und Carbonate, deren Verwendung bekannt ist aus JP-A-90/47371 (S.Yokoyama und K. Hirota; offengelegt am 16.02.1990 für Kyoeisha Yushi K.K. AG, Japan).

Bei allen vorstehenden Verfahren wird das aminofunktionelle Organopolysiloxan als Öl mit den entsprechenden Acylierungsmitteln umgesetzt. Die Viskositäten der meist ohnehin stark viskosen Öle steigen durch die Acylierung erheblich an. Dies führt zu Schwierigkeiten bei der Emulgierung, da die Viskosität die mechanische Durchmischbarkeit und Homogenisierung beeinträchtigt. Insbesondere weisen die fertigen Emulsionen relativ große Teilchengrößen und breite Teilchengrößenverteilungen auf. Deshalb ist die Lager- und Scherstabilität der Emulsionen häufig unbefriedigend. Bei der Ausrüstung von Textilien führen derartige Emulsionen zu ungleichmäßiger Verteilung des Siliconwirkstoffs auf dem textilen Substrat. Derartige Emulsionen können auch zu Ablagerungen auf Maschinenteilen führen.

Die Acylierungsmittel verringern ferner den Weichgriffeffekt der behandelten Textilien bei hohen Acylierungsgraden.

Die Umsetzung von aminofunktionellen Organopolysiloxanen mit Dialkyloxalaten und Dialkylpyrocarbonaten als Acylierungsmittel in Emulsion zur Reduzierung der Thermovergilbung und die Verwendung der erhaltenen Emulsion als Textilbehandlungsmittel ist aus US-A-5,039,738 (A.M.Czech; ausgegeben am 13.08.1991 für Union Carbide Corp., USA) bekannt.

Die Dialkyloxalate reduzieren die Thermovergilbung aber nicht im gleichen Maße wie z.B. Acetanhydrid oder Dialkylpyrocarbonate. Außerdem neigen Dialkyloxalate aufgrund ihrer Doppelreaktivität gegenüber Aminogruppen

```
            OO                    O O
            || ||     -2ROH       ||  ||
2 =NH + ROCCOR   ----------->   =N-C-C-N=
```

zur Vernetzung von aminofunktionellen Polysiloxanen. Diese Vernetzung kann sich ungünstig auf die Lagerstabilität von Emulsionsformulierungen durch vorzeitige Ausfällungen auswirken und bei der Anwendung zu unerwünschten Ablagerungen von vernetztem Siliconmaterial auf Maschinenteilen, wie Abquetschwalzen usw., führen.

Dialkylpyrocarbonate ergeben zwar eine zufriedenstellende Reduzierung der Thermovergilbung, weisen jedoch den Nachteil auf, daß bei der Umsetzung mit aminofunktionellen Gruppen $CO_2$ und Alkohol freigesetzt wird. Die $CO_2$-Entwicklung jedoch kann zu unerwünschtem Schäumen führen und die Bildung von Alkohol, insbesondere von Methanol, ist aus toxikologischen Gründen bedenklich. Außerdem sind Dialkylpyrocarbonate entweder in technischen Mengen gar nicht verfügbar oder aber sehr teuer.

Der vorliegenden Erfindung liegt die Aufgabe zugrunde, eine acyliertes aminofunktionelles Organopolysiloxan enthaltende Emulsion durch ein einfach durchzuführendes Verfahren bereitzustellen, wobei die

Emulsion gute Lagerstabilität aufweist und als Textilausrüstungsmittel einsetzbar ist oder aus der leicht ein Textilausrüstungsmittel hergestellt werden kann, welches den damit behandelten Textilien gute Weichgriffeigenschaften als auch eine geringe Thermovergilbungsneigung verschafft.

Die Erfindung betrifft ein Verfahren zur Herstellung von acyliertes aminofunktionelles Organopolysiloxan enthaltenden Emulsionen, wobei (A) Organopolysiloxan, das mindestens einen einwertigen SiC-gebundenen Rest mit primären und/oder sekundären Aminogruppen aufweist, mit (B) Carbonsäureanhydrid in Gegenwart von (C) Emulgator und (D) einer Wasserphase umgesetzt wird.

Die Acylierungsreaktion von (A) Organopolysiloxan mit (B) Carbonsäureanhydrid findet in Gegenwart von Wasser, also während und/oder nach der Emulgierung des Organopolysiloxans statt. Die Carbonsäureanhydride dienen als Acylierungsmittel und reagieren dabei nicht mit Wasser, sondern fast ausschließlich mit den Aminogruppen des Organopolysiloxans (A). Ein Verlust an Carbonsäureanhydrid (B) durch Hydrolyse ist kaum feststellbar. Die Acylierungsreaktion verläuft in der Regel bereits bei Normaldruck und Raumtemperatur ausreichend schnell und benötigt deshalb weder erhöhte Temperaturen noch spezielle Katalysatoren zur Reaktionsbeschleunigung.

Die Durchführung der Acylierung während der Emulgierung vereinfacht das Herstellungsverfahren von acyliertes aminofunktionelles Organopolysiloxan enthaltenden Emulsionen, weil nicht mehr zwei Verfahrensschritte, nämlich Acylierung und nachfolgende Emulgierung, notwendig sind. Auch wird die durch die fortschreitende Acylierung zunehmende Viskosität des Organopolysiloxans (A) durch Verdünnungseffekte bei der Emulgierung kompensiert. Emulgierprobleme und unbefriedigende Teilchengröße und mangelnde Scherstabilität aufgrund der zu hohen Viskosität treten nicht auf.

Bei der Durchführung der Acylierung nach der Emulgierung können noch kleinere Teilchengrößen erreicht werden, da die relativ niedrigviskosen aminofunktionellen Organopolysiloxane (A) sehr feinteilig emulgiert werden können. Die derzeit üblichen Emulsionen oder Mikroemulsionen aminofunktioneller Organopolysiloxane (A), die gute Lagerstabilität aufweisen, können beispielsweise vor der Anwendung als Textilbehandlungsmittel zu dem gewünschten Acylierungsgrad acyliert werden. Dabei kann die verdünnte Emulsion und vorzugsweise das Konzentrat acyliert werden. Ein geeignetes Verfahren zur Herstellung von £einteiligen Organopolysiloxanemulsionen ist beispielsweise bekannt aus EP-A-442 098 (K.Huhn et al.; offengelegt am 21.08.1991 für Wacker-Chemie GmbH, München). Dort wird die Emulsion mit einem im Organopolysiloxan (A) löslichen Emulgator in 2 Schritten hergestellt, wobei im ersten Schritt ein Konzentrat erhalten wird, welches im zweiten Schritt mit Wasser verdünnt wird.

Vorzugsweise weist das Organopolysiloxan (A) mindestens eine Siloxaneinheit der allgemeinen Formel (I)

$$R^1_a Q_b SiO_{\frac{(4-a-b)}{2}} \qquad (I)$$

auf, und alle anderen Siloxaneinheiten die allgemeine Formel (II)

$$R^1_c SiO_{\frac{(4-c)}{2}} \quad , \qquad (II)$$

wobei

**R¹** gleiche oder verschiedene, einwertige, gegebenenfalls Fluor-, Chlor- oder Brom-substituierte $C_1$- bis $C_{18}$-Kohlenwasserstoffreste, Wasserstoffatome, $C_1$- bis $C_{12}$-Alkoxy- oder Hydroxyreste oder Alkylglykolreste bedeutet,

**Q** eine Gruppe der allgemeinen Formel (III)

$$-R^2-[NR^3(CH_2)_m]_d NHR^3 \qquad (III)$$

bedeutet, wobei

**R²** einen zweiwertigen $C_1$- bis $C_{18}$-Kohlenwasserstoffrest bedeutet,

**R³** ein Wasserstoffatom oder einen gegebenenfalls Fluor-, Chlor- oder Brom-substituierten $C_1$- bis $C_{18}$-Kohlenwasserstoffrest bedeutet,

**a** die Werte 0, 1 oder 2 hat,
**b** die Werte 1, 2 oder 3 hat,
**c** die Werte 0, 1, 2 oder 3 hat,
**d** die Werte 0, 1, 2, 3 oder 4 hat,
**m** die Werte 2, 3, 4, 5 oder 6 hat
und die Summe aus a und b maximal 4 beträgt.

Beispiele für $C_1$- bis $C_{18}$-Kohlenwasserstoffreste sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der $\alpha$- und der $\beta$-Phenylethylrest.

Die vorstehenden Kohlenwasserstoffreste enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste mit aliphatischer Doppelbindung sind der Vinyl-, Allyl-, und 5-Hexen-1-ylrest.

Vorzugsweise enthalten jedoch höchstens 1 % der Kohlenwasserstoffreste $R^1$ eine Doppelbindung.

Beispiele für mit Fluor-, Chlor- oder Bromatomen substituierte $C_1$- bis $C_{18}$-Kohlenwasserstoffreste sind der 3,3,3-Trifluor-n-propylrest, der 2,2,2,2',2',2'-Hexafluorisopropylrest, der Heptafluorisopropylrest, und der o-, m-, und p-Chlorphenylrest.

Beispiele für die zweiwertigen $C_1$- bis $C_{18}$-Kohlenwasserstoffreste $R^2$ sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenreste, wobei der n-Propylenrest und der 2-Methylpropylenrest besonders bevorzugt sind.

Die Alkoxyreste sind über ein Sauerstoffatom gebundene vorstehend beschriebene Alkylreste. Die Beispiele für Alkylreste gelten im vollen Umfang auch für die Alkoxyreste.

Die Alkylglykolreste $R^1$ weisen vorzugsweise die allgemeine Formel (IV)

$$-R^2-[O(CHR^3)_d]_nOR^4 \qquad (IV)$$

auf, in der $\mathbf{R^2}$, $\mathbf{R^3}$ und **d** die vorstehenden Bedeutungen haben, **n** den Wert 1 bis 100 hat und $\mathbf{R^4}$ ein Wasserstoffatom, einen Rest $R^3$ oder eine Gruppe der allgemeinen Formel

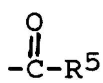

bedeutet, wobei $R^5$ den Rest $R^3$ oder $O-R^3$ bedeutet.

In den vorstehenden allgemeinen Formeln (I) bis (IV) bedeuten vorzugsweise
$\mathbf{R^1}$ einen Methyl-, Phenyl-, $C_1$- bis $C_3$-Alkoxy- oder Hydroxyrest oder einen Rest der allgemeinen Formel IV,
$\mathbf{R^2}$ einen zweiwertigen $C_2$- bis $C_6$-Kohlenwasserstoffrest,
$\mathbf{R^3}$ ein Wasserstoffatom oder einen Methylrest,
**a** die Werte 0 oder 1,
**b** den Wert 1,
**c** die Werte 2 oder 3 und
**d** den Wert 1.

Besonders bevorzugt sind lineare Polydimethylsiloxane, die gegebenenfalls $C_1$- bis $C_3$-Alkoxy- oder Hydroxyendgruppen aufweisen. Vorzugsweise bedeutet bei diesen Polymethylsiloxanen Q eine Gruppe $H_2N(CH_2)_2NH(CH_2)_3$- oder $H_2N(CH_2)_2NHCH_2CH(CH_3)CH_2$-.

Vorzugsweise beträgt das Verhältnis der Siloxaneinheiten der allgemeinen Formel (I) zu den Siloxaneinheiten der allgemeinen Formel (II) 1 : 10 bis 30 000, insbesondere 1 : 20 bis 300. Die Amingehalte betragen vorzugsweise 0,001 bis 2 mequiv/g, insbesondere 0,1 bis 1,0 mequiv/g, gemessen als Verbrauch an 1n Salzsäure in ml/g Organopolysiloxan (A) bei der Titration bis zum Neutralpunkt.

Es kann eine Art von Organopolysiloxan (A) eingesetzt werden. Es kann aber auch ein Gemisch aus mindestens zwei verschiedenen Arten von Organopolysiloxan (A) eingesetzt werden.

Das Organopolysiloxan (A) oder ein Gemisch aus mindestens zwei verschiedenen Arten von Organopolysiloxan (A) hat vorzugsweise eine durchschnittliche Viskosität von 50 bis 100000 mPa.s, insbesondere 100 bis 10000 mPa.s, bei 25 °C.

Vorzugsweise werden als Carbonsäureanhydride (B), solche der allgemeinen Formel (V)

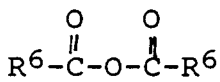

(V)

eingesetzt, in der

**R**$^6$ gleich oder verschieden sind und Wasserstoffatome oder einwertige, gegebenenfalls Fluor-, Chlor- oder Brom-substituierte $C_1$- bis $C_{18}$-Kohlenwasserstoffreste oder durch Sauerstoffatome unterbrochene Kohlenwasserstoffreste bedeuten oder beide Reste **R**$^6$ unter Bildung einer organischen cyclischen Struktur miteinander verknüpft sind.

Besonders geeignet sind Anhydride monofunktioneller Carbonsäuren der allgemeinen Formeln

$[R^3\text{-}CO]_2O$ und
$[R^3\text{-}O(CH_2CHR^3O)_eR^2\text{-}CO]_2O$,

in denen $R^2$ und $R^3$ die vorstehenden Bedeutungen aufweisen und **e** einen Wert von 0 bis 100 hat. Gemischte Anhydride aus zwei verschiedenen Carbonsäuren sind ebenfalls geeignet.

Bevorzugt eingesetzt werden die Carbonsäureanhydride der nachstehenden allgemeinen Formel

$[H(CH_2)_fCO]_2O$ ,

in der **f** einen Wert von 1 bis 19, insbesondere 1 bis 5, hat, sowie

$[H(CH_2)_gO(CH_2CH_2O)_gCH_2\text{-}CO]_2O$

in der **g** einen Wert von 1 bis 20 hat.

Bevorzugt sind Propionsäureanhydrid und insbesondere Essigsäureanhydrid, bei dem keine Reaktion mit Wasser stattfindet, sondern ausschließlich Acylierung der Aminogruppen des Organopolysiloxans (A) erfolgt.

Besonders geeignet sind auch cyclische Anhydride difunktioneller Carbonsäuren der allgemeinen Formel

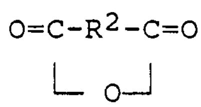

,

in der $R^2$ die vorstehenden Bedeutungen aufweist. Bevorzugt eingesetzt werden die cyclischen Anhydride difunktioneller Carbonsäuren der nachstehenden allgemeinen Formel

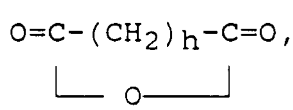

in der **h** die Werte 2 bis 8 aufweist.

Besonders bevorzugt ist Bernsteinsäureanhydrid und Maleinsäureanhydrid.

Als Emulgatoren (C) können beliebige für die Herstellung von Organopolysiloxanemulsionen verwendbare Emulgatoren eingesetzt werden, die sich gegenüber dem Carbonsäureanhydrid inert verhalten.

Als anionische Emulgatoren eignen sich besonders:

1. Alkylsulfate, besonders solche mit einer Kettenlänge von 8 bis 18 C-Atomen und Alkylethersulfate mit 8 bis 18 C-Atomen im hydrophoben Rest und 1 bis 40 Ethylenoxid(EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C- Atomen; ggf. können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Alkylpolyglycolether, vorzugsweise solche mit 8 bis 40 EO-Einheiten und Alkylresten von 8 bis 20 C-Atomen.
6. Alkylarylpolyglycolether, vorzugsweise solche mit 8 bis 40 EO-Einheiten und 8 bis 20 C-Atomen in den Alkyl- und Arylresten.
7. Ethylenoxid/Propylenoxid(EO/PO)-Blockcopolymere, vorzugsweise solche mit 8 bis 40 EO- bzw. PO-Einheiten.
8. Fettsäuren mit 6 bis 24 C-Atomen.
9. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.
10. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

11. Salze von primären, sekundären und tertiären Fettaminen mit 8 bis 24 C-Atomen mit Essigsäure, Schwefelsäure, Salzsäure und Phosphorsäuren.
12. Quarternäre Alkylbenzolammoniumsalze, insbesondere solche, deren Alkylgruppe 6 bis 24 C-Atome besitzt, insbesondere die Halogenide, Sulfate, Phosphate und Acetate.
13. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Ferner eignen sich als Emulgatoren zur Herstellung der Emulsionen Fettsäurepolyglykolester, polyethoxylierte Fettsäureglyceride und Sorbitanester, Alkylpolyglycoside, Fettsäurealkylolamide, Alkylethercarbonsäuren, Alkarylethercarbonsäuren, ethoxylierte quarternäre Ammoniumsalze, Aminoxide, Betaine, Sulfobetaine und Sulfosuccinate.

Die fertigen Emulsionen bestehen aus einer diskontinuierlichen Ölphase, die das acylierte Organopolysiloxan (A) umfaßt, den Emulgatoren und der kontinuierlichen Wasserphase (D) (Öl-in-Wasser-Emulsion).

Die Gewichtsverhältnisse der diskontinuierlichen Ölphase und der kontinuierlichen Wasserphase können in weiten Bereichen variiert werden. In der Regel beträgt der Anteil der Ölphase 5 bis 60 Gew.-%, vorzugsweise 10 bis 40 Gew.-%, jeweils bezogen auf das Gesamtgewicht der Emulsion. Der Anteil an Emulgatoren liegt vorzugsweise im Bereich von 5 bis 100 Gew.-%, insbesondere 10 bis 50 Gew.-%, jeweils bezogen auf das Gewicht der Ölphase.

Bezogen auf den Gehalt an Aminogruppen im Organopolysiloxan (A) werden vorzugsweise 0,5 bis 100 Mol-%, insbesondere 20 bis 80 Mol-%, an Carbonsäureanhydrid (B) eingesetzt.

Die bevorzugte mittlere Teilchengröße der diskontinuierlichen Ölphase beträgt weniger als 140 nm, insbesondere weniger als 120 nm. Besonders bevorzugt sind mittlere Teilchengrößen von höchstens 100 nm, insbesondere höchstens 80 nm.

Mit sinkender mittlerer Teilchengröße steigt nicht nur die Lagerstabilität und Scherstabilität, sondern es wird auch die maschinelle Verarbeitbarkeit verbessert, eine gleichmäßigere Verteilung auf dem textilen Substrat erreicht und eine bessere Penetration in das Substrat bewirkt. Die mit feinteiligen Emulsionen behandelten textilen Substrate weisen einen besonders guten Weichgriff auf.

Die Emulsion kann beliebige an sich bekannte Katalysatoren für die Kondensation von direkt an Silicium gebundenen, kondensationsfähigen Gruppen, wie Alkoxygruppen, enthalten. Beispiele für solche Kondensationskatalysatoren sind insbesondere Carbonsäuresalze von Zinn oder Zink, wobei an Zinn Kohlenwasserstoffreste direkt gebunden sein können, wie Di-n-butylzinndilaurat, Zinnoctoate, Di-2-ethylzinndilaurat, Di-n-butylzinndi-2-ethylhexoat, Di-2-ethylhexylzinndi-2-ethylhexoat, Dibutyl- oder Dioctylzinndiacylate, wobei sich die Acylatgruppen jeweils von Alkansäuren mit 3 bis 16 Kohlenstoffatomen je Säure ableiten, bei denen mindestens zwei der Valenzen des an die Carboxylgruppe gebundenen Kohlenstoffatoms durch mindestens zwei andere Kohlenstoffatome als dasjenige der Carboxygruppe abgesättigt sind, und Zinkoctoate. Weitere

Beispiele für Katalysatoren sind Alkoxytitanate, wie Butyltitanate und Triethanolamintitanat, sowie Zirkonium- und Aluminiumverbindungen, insbesondere deren Carbonsäuresalze und Alkoholate.

Vorzugsweise wird der Kondensationskatalysator in Mengen von 0 bis 10 Gew.-%, bezogen auf das Gewicht der diskontinuierlichen Ölphase, eingesetzt.

Die Emulsion kann für bestimmte Zwecke, beispielsweise für den Einsatz als Textilbehandlungsmittel, neben den vorstehenden Bestandteilen Zusatzstoffe enthalten. Geeignete Zusatzstoffe sind beispielsweise Biozide, wie Fungizide, Bakterizide, Algicide und Mikrobicide, Verdickungsmittel, Frostschutzmittel, Antistatika, Farbstoffe, Flammschutzmittel und organische Weichmacher.

Die Emulsion ist sehr gut lagerfähig und gut verdünnbar und kann zur Behandlung von organischen Fasern, wie Fäden und Garnen, und daraus hergestellten textilen Gebilden, wie Vliesen, Matten, Strängen, gewebten, gewirkten oder gestrickten Textilien, die auch bisher mit Organosiliciumverbindungen imprägniert werden konnten, verwendet werden. Beispiele für Fasern, die imprägniert werden können, sind somit solche aus Keratin, insbesondere Wolle, Polyvinylalkohol, Mischpolymere von Vinylacetat, Baumwolle, Rayon, Hanf, natürliche Seide, Polypropylen, Polyethylen, Polyester, Polyurethan, Polyamid, Cellulose und Gemische aus mindestens zwei solcher Fasern. Wie aus der vorstehenden Aufzählung ersichtlich, können die Fasern natürlicher oder synthetischer Herkunft sein. Die Textilien können in Form von Stoffbahnen oder Kleidungsstücken bzw. Teilen von Kleidungsstücken vorliegen.

Bei Keratin, insbesondere Wolle, kann durch Imprägnierung mit der als Textilbehandlungsmittel verwendeten vernetzbaren Zusammensetzung oder deren Umsetzungsprodukt, vor allem, wenn das Keratin mit Chlor vorbehandelt, gespült und neutralisiert wurde, das Schrumpfen durch Verfilzen verhindert werden.

Die erfindungsgemäß hergestellte Emulsion wird dabei auf die zu imprägnierende Faser oder das textile Gebilde aufgetragen. Die Emulsion kann, falls erforderlich, auf eine geeignete Anwendungskonzentration verdünnt werden. Zum Auftragen kann die Emulsion noch mit anderen Additiven, wie organischen Weichmachern, Wachsdispersionen und zusätzlichen Katalysatoren, insbesondere Kondensationskatalysatoren, versetzt werden.

Das Auftragen auf die zu imprägnierenden Fasern und textilen Gebilde kann in beliebiger für die Imprägnierung von Fasern geeigneter und vielfach bekannter Weise erfolgen, z. B. durch Ausziehen, Tauchen, Streichen, Gießen, Sprühen, einschließlich Sprühen aus Aerosolverpackung, Aufwalzen, Klotzen oder Drucken.

Vorzugsweise wird die Emulsion in solchen Mengen aufgetragen, daß die Gewichtszunahme der Faser durch diese Zusammensetzung, abzüglich der dabei gegebenenfalls mitverwendeten Verdünnungsmittel, 0,1 bis 10 Gew.-%, vorzugsweise 0,5 bis 4 Gew.-%, bezogen auf das Gewicht der Faser, beträgt.

Die mit der erfindungsgemäß hergestellten Emulsion behandelten Fasern und textilen Gebilde weisen einen angenehmen weichen Griff auf, sind besonders beständig gegen Thermovergilbung und weisen vorteilhafte Eigenschaften bei Hydrophilie und Soil-release auf.

In den folgenden Beispielen beziehen sich alle Angaben von Teilen und Prozentsätzen auf das Gewicht, soweit nichts anderes angegeben ist.

JFZ bedeutet Jodfarbzahl nach DIN 6162.

## Beispiele

Beispiel 1:

334 g des aminofunktionellen Siliconöls A mit folgender Formel (titrierbarer Amingehalt = 0,3 mequiv/g, Viskosität ca. 1000 mm$^2$/s, JFZ = 0)

$$\begin{array}{l} MeO[Me_2SiO]_{215}[MeSiO]_{2,5}Me \\ \qquad\qquad\qquad\qquad\quad | \\ \qquad\qquad\qquad\qquad\ (CH_2)_3 \\ \qquad\qquad\qquad\qquad\quad | \\ \qquad\qquad\qquad\qquad\ NHCH_2CH_2NH_2 \end{array}$$

wurden bei Raumtemperatur mit 6,1 Gew.-Teilen Essigsäureanhydrid und anschließend 50 Gew.-Teilen des Emulgators Genapol$^R$X 060 (Isotridecylalkoholpolyglykolether mit 6 Ethylenoxydeinheiten der Firma Hoechst

AG, Frankfurt) vermischt. Unmittelbar danach wurde durch Emulgieren mit 60 Gew.-Teilen Wasser ein Emulsionskonzentrat hergestellt, welches anschließend mit 550 Gew.-Teilen Wasser verdünnt wurde. Die Emulsion enthielt ein Aminöl mit einem titrierbaren Amingehalt von 0,12 mequiv/g.

Beispiel 2 (Vergleichsbeispiel):

334 Gew.-Teile des aminofunktionellen Siliconöls A wurden bei Raumtemperatur mit 6,1 Gew.-Teilen Essigsäureanhydrid umgesetzt. Das acetylierte Aminöl besaß einen titrierbaren Amingehalt von 0,12 mequiv/g. Die Viskosität erhöhte sich auf 15000 $mm^2/s$ und das Öl zeigte eine leichte Vergilbung (JFZ = 1). Nach einer Lagerzeit von 14 Tagen bei Raumtemperatur unter Luftausschluß wies das acetylierte Öl einen titrierbaren Amingehalt von 0,12 mequiv/g, eine Viskosität von 49000 $mm^2/s$ und eine JFZ von 2 auf. Das acetylierte Öl wurde nach 14 Tagen Lagerung mit 50 Gew.-Teilen des Emulgators Genapol$^R$X 060 vermischt. Durch Emulgieren mit 60 Gew.-Teilen Wasser wurde ein Emulsionskonzentrat hergestellt, welches anschließend mit 550 Gew.-Teilen Wasser verdünnt wurde.

Beispiel 3:

334 Gew.-Teile des aminofunktionellen Siliconöls A wurden bei Raumtemperatur mit 50 Gew.-Teilen des Emulgators Genapol$^R$X 060 vermischt. Durch Emulgieren mit 60 Gew.-Teilen Wasser wurde ein Emulsionskonzentrat hergestellt. 6,1 Gew.-Teile Essigsäureanhydrid wurden zugegeben und anschließend wurde mit 550 Gew.-Teilen Wasser verdünnt. Die Emulsion enthielt ein Aminöl mit einem titrierbaren Amingehalt von 0,12 mequiv/g.

Beispiel 4:

170 Gew.-Teile des aminofunktionellen Siliconöls B mit folgender chemischer Struktur (titrierbarer Amingehalt = 0,6 mequiv/g)

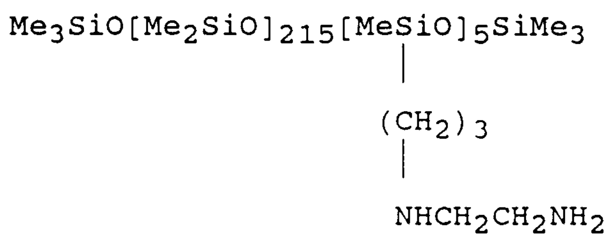

wurden bei Raumtemperatur mit 60 Gew.-Teilen des Emulgators Genapol$^R$X 060 vermischt. Durch Emulgieren mit 60 Gew.-Teilen Wasser wurde ein Emulsionskonzentrat hergestellt, welches anschließend mit 555 Gew.-Teilen Wasser verdünnt wurde. Die feinteilige Emulsion mit einer mittleren Teilchengröße von weniger als 80 nm wurde mit 5,1 Gew.-Teilen Essigsäureanhydrid versetzt. Die Mikroemulsion enthielt nach einer Reaktionszeit von 10 Minuten ein Aminöl mit einem titrierbaren Amingehalt von 0,30 mequiv/g.

Beispiel 5:

170 Gew.-Teile des aminofunktionellen Siliconöls B (titrierbarer Amingehalt = 0,6 mequiv/g) wurden bei Raumtemperatur mit 60 Gew.-Teilen des Emulgators Genapol$^R$X 060 vermischt. Durch Emulgieren mit 60 Gew.-Teilen Wasser wurde ein Emulsionskonzentrat hergestellt. 3,5 Gew.-Teile Essigsäureanhydrid wurden zugegeben und anschließend wurde mit 550 Gew.-Teilen Wasser verdünnt. Die feinteilige Emulsion enthielt ein Aminöl mit einem titrierbaren Amingehalt von 0,40 mequiv/g.

Beispiel 6

Zu einer nichtionogenen 35 %igen Wasser-in-Öl(W/O)-Emulsion, die 235 g des aminofunktionellen Siliconöls C mit folgender Formel (titrierbarer Amingehalt = 0,52 mequiv/g)

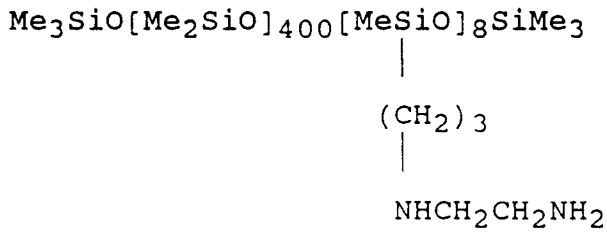

enthielt, wurde bei Raumtemperatur unter Rühren 4,0 g gepulvertes Bernsteinsäureanhydrid gegeben. Nach 30 Minuten betrug der titrierbare Amingehalt des enthaltenen aminofunktionellen Siliconöls 0,19 mequiv/g.

Beispiel 7:

Anwendungstechnische Beurteilung der in Beispiel 1 - 5 hergestellten Emulsionen:

7 a Teilchengröße

Die mittlere Teilchengröße wurde am Partikelgrößenmeßgerät Autosizer 2c der Firma Mütek bestimmt.

7 b Scherstabilität:

Die zu testenden Emulsionen wurden mit Wasser auf einen Festgehalt von 0,6 % verdünnt. Anschließend wurden die so hergestellten Testlösungen auf ihre Scherstabilität hin (mit einem Flügelrührer 800 UpM, 5 Minuten) geprüft. Beurteilt wurde das Aussehen nach dem Schertest, wobei folgende Wertung vorgenommen wurde:

A: Aussehen unverändert, keine Ölflecken.
B: Leichte Ölflecken auf der Oberfläche.
C: Mehrere stärkere Ölflecken auf der Oberfläche.

7 c Textilausrüstung:

Die zu testenden Emulsionen wurden mit Wasser auf einen Festgehalt von 0,5 % verdünnt und durch Tauchen und anschließendes Abquetschen auf weißes Baumwollgewebe aufgebracht. Das Abquetschen wurde derart durchgeführt, daß eine Flüssigkeitsaufnahme von 75 %, bezogen auf das Baumwollgewicht, erreicht wurde. Anschließend wurden die so imprägnierten Baumwollgewirke 5 Minuten bei 150 °C getrocknet und folgenden anwendungstechnischen Prüfungen unterzogen:

Griffbeurteilung

Die Beurteilung erfolgte in einem Handtest nach einer relativen Skala von 0 - 10, wobei der Wert 10 den besten Weichgriff darstellt.

Vergilbung

Der Grad der Vergilbung wurde mit einem Farbmeßgerät (Minolta Chromameter CR 200) festgestellt. Der gemessene Gelbwert b+ wurde mit der unbehandelten Probe als Referenz verglichen und als Δb+ festgehalten:

Δb+ = b+ (Probe) - b+ (Referenz)

Abnehmende Vergilbung bedeutete kleinere Δb+ Werte.

| Emulsion aus Beispiel | 1 | 2 | 3 | 4 | 5 | Unbehandelt |
|---|---|---|---|---|---|---|
| Teilchengröße (nm) | 100 | 140 | 70 | 30 | 40 | - |
| Scherstabilität | A | B | A | A | A | - |
| Weichgriff | 8 | 7 | 8 | 9 | 9 | 0 |
| Δb+ | +0,9 | +1,3 | +0,9 | +1,2 | +1,1 | 0 |

## Patentansprüche

1. Verfahren zur Herstellung von acyliertes aminofunktionelles Organopolysiloxan enthaltenden Emulsionen, wobei (A) Organopolysiloxan, das mindestens einen einwertigen SiC-gebundenen Rest mit primären und/oder sekundären Aminogruppen aufweist, mit (B) Carbonsäureanhydrid umgesetzt wird, dadurch gekennzeichnet, daß die Umsetzung in Gegenwart von (C) Emulgator und (D) einer Wasserphase durchgeführt wird.

2. Verfahren nach Anspruch 1, dadurch gekennzeichnet, daß die Acylierung während oder nach der Emulgierung durchgeführt wird.

3. Verfahren nach Anspruch 1 oder 2, dadurch gekennzeichnet, daß das Organopolysiloxan (A) mindestens eine Siloxaneinheit der allgemeinen Formel (I)

$$R^1_aQ_bSiO_{\frac{(4-a-b)}{2}} \qquad (I)$$

aufweist, und alle anderen Siloxaneinheiten die allgemeine Formel (II)

$$R^1_cSiO_{\frac{(4-c)}{2}} \qquad (II)$$

aufweisen, wobei
**$R^1$** gleiche oder verschiedene, einwertige, gegebenenfalls Fluor-, Chlor- oder Brom-substituierte $C_1$- bis $C_{18}$-Kohlenwasserstoffreste, Wasserstoffatome, $C_1$- bis $C_{12}$-Alkoxy- oder Hydroxyreste oder Alkylglykolreste bedeutet,
**Q** eine Gruppe der allgemeinen Formel (III)

$$-R^2-[NR^3(CH_2)_m]_dNHR^3$$

bedeutet, wobei
**$R^2$** einen zweiwertigen $C_1$- bis $C_{18}$-Kohlenwasserstoffrest bedeutet,
**$R^3$** ein Wasserstoffatom oder einen gegebenenfalls Fluor-, Chlor- oder Brom-substituierten $C_1$- bis $C_{18}$-Kohlenwasserstoffrest bedeutet,
**a** die Werte 0, 1 oder 2 hat,
**b** die Werte 1, 2 oder 3 hat,
**c** die Werte 0, 1, 2 oder 3 hat,
**d** die Werte 0, 1, 2, 3 oder 4 hat,
**m** die Werte 2, 3, 4, 5 oder 6 hat
und die Summe aus a und b maximal 4 beträgt.

4. Verfahren nach Anspruch 1 bis 3, dadurch gekennzeichnet, daß als Carbonsäureanhydride (B) solche der allgemeinen Formel (V)

$$R^6-\overset{\overset{O}{\|}}{C}-O-\overset{\overset{O}{\|}}{C}-R^6 \qquad (V)$$

eingesetzt werden, wobei
**R**$^6$ gleich oder verschieden sind und Wasserstoffatome oder einwertige, gegebenenfalls Fluor-, Chlor- oder Brom-substituierte $C_1$- bis $C_{18}$-Kohlenwasserstoffreste oder durch Sauerstoffatome unterbrochene Kohlenwasserstoffreste bedeuten oder beide Reste **R**$^6$ unter Bildung einer organischen cyclischen Struktur miteinander verknüpft sind.

## Claims

1. Process for the preparation of emulsions comprising acylated amino-functional organopolysiloxane, in which process (A) organopolysiloxane, which has at least one monovalent SiC-bonded radical comprising primary and/or secondary amino groups, is reacted with (B) carboxylic acid anhydride, characterized in that the reaction is carried out in the presence of (C) emulsifier and (D) an aqueous phase.

2. Process according to Claim 1, characterized in that the acylation is carried out during or after the emulsification.

3. Process according to Claim 1 or 2, characterized in that the organopolysiloxane (A) has at least one siloxane unit of the general formula (I)

$$R^1{}_aQ_bSiO_{\frac{(4-a-b)}{2}} \qquad \textbf{(I)}$$

and all other siloxane units have the general formula (II)

$$R^1{}_cSiO_{\frac{(4-c)}{2}} \qquad \textbf{(II)}$$

in which
the $R^1$s denote identical or different, monovalent, optionally fluorine-, chlorine- or bromine-substituted $C_1$ to $C_{18}$ hydrocarbon radicals, hydrogen atoms, $C_1$ to $C_{12}$ alkoxy radicals or hydroxyl radicals or alkyl glycol radicals,
Q denotes a group of the general formula (III)

$-R^2-[NR^3(CH_2)_m]_dNHR^3$

in which
$R^2$ denotes a divalent $C_1$ to $C_{18}$ hydrocarbon radical,
$R^3$ denotes a hydrogen atom or an optionally fluorine-, chlorine- or bromine-substituted $C_1$ to $C_{18}$ hydrocarbon radical,
a has the values 0, 1 or 2,
b has the values 1, 2 or 3,
c has the values 0, 1, 2 or 3,
d has the values 0, 1, 2, 3 or 4,

m has the values 2, 3, 4, 5 or 6
and the sum of a and b is at most 4.

4. Process according to Claims 1 to 3, characterized in that the carboxylic acid anhydrides (B) used are those of the general formula (V)

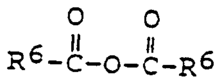

(V)

in which
the $R^6$s are identical or different and denote hydrogen atoms or monovalent, optionally fluorine-, chlorine- or bromine-substituted $C_1$ to $C_{18}$ hydrocarbon radicals or hydrocarbon radicals interrupted by oxygen atoms, or the two radicals $R^6$ are linked together with the formation of an organic cyclic structure.

**Revendications**

1. Procédé pour préparer des émulsions contenant un organopolysiloxane acylé aminofonctionnel, dans lequel on fait réagir un organopolysiloxane (A), qui comporte au moins un radical monovalent lié à SiC- avec des groupes amino primaires et/ou secondaires, avec un anhydride d'acide carboxylique (B), caractérisé en ce que la réaction est effectuée en présence d'un émulsifiant (C) et d'une phase aqueuse (D).

2. Procédé selon la revendication 1, caractérisé en ce que l'acylation est effectuée pendant ou après l'émulsification.

3. Procédé selon la revendication 1 ou 2, caractérisé en ce que l'organopolysiloxane (A) présente au moins une unité siloxane de formule générale (I)

$$R^1_a Q_b SiO_{\frac{(4-a-b)}{2}} \qquad (I)$$

et toutes les autres unités siloxanes ont la formule générale (II)

$$R^1_c SiO_{\frac{(4-c)}{2}} \qquad (II)$$

dans laquelle
$R^1$ représente des radicaux hydrocarbonés monovalents en $C_1$-$C_{18}$, identiques ou différents, éventuellement substitués par le fluor, le chlore ou le brome, ou des atomes d'hydrogène, des radicaux alcoxy en $C_1$-$C_{12}$ ou des radicaux hydroxy ou des radicaux alkylglycols,
Q représente un groupe de formule générale (III)

$-R^2-[NR^3(CH_2)_m]_d NHR^3$

dans laquelle
$R^2$ représente un radical hydrocarboné bivalent en $C_1$-$C_{18}$,
$R^3$ représente un atome d'hydrogène ou un radical hydrocarboné en $C_1$-$C_{18}$ éventuellement substitué par le fluor, le chlore ou le brome,
a possède la valeur 0, 1 ou 2,
b possède la valeur 1, 2 ou 3,

c possède la valeur 0, 1, 2 ou 3,
d possède la valeur 0, 1, 2, 3 ou 4,
m possède la valeur 2, 3, 4, 5 ou 6
et la somme de a et b est au maximum de 4.

**4.** Procédé selon une des revendications 1 à 3, cartactérisé en ce que l'on utilise comme anhydrides d'acides carboxyliques (B) ceux de formule générale (V)

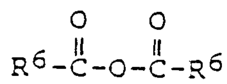

(V)

dans laquelle
les $R^6$ sont identiques ou différents et représentent des atomes d'hydrogène ou des radicaux hydrocarbonés monovalents en $C_1$-$C_{18}$, éventuellement substitués par le fluor, le chlore ou le brome, ou des radicaux hydrocarbonés interrompus par des atomes d'oxygène, ou les deux radicaux $R^6$ sont liés entr'eux en formant une structure organique cyclique.